# EUROPÄISCHE PATENTANMELDUNG

(11) **EP 1 331 321 A1**
(43) Veröffentlichungstag der Anmeldung: **30.07.2003**
(21) Anmeldenummer: 02405042.9
(22) Anmeldetag: 24.01.2002
(51) Int. Cl.: E04C 5/12

(54) **Verfahren zum Erstellen einer Endverbindung an einem Drahtseil und danach erstellte Endverbindung**

(71) Anmelder: AVT Anker + Vorspanntechnik AG, CH-1712 Tafers (CH)
(72) Erfinder: Von Allmen, Hans Peter, 1712 Tafers (CH); Scherwey, Herbert, 3185 Schmitten (CH); Schneider, Hans, 3186 Düdingen (CH)
(74) Vertreter: AMMANN PATENTANWAELTE AG BERN

(57) **Zusammenfassung**

Zur Befestigung an Bauwerken müssen Drahtseile mit Endverbindungen versehen werden. Es wird ein Verfahren und ein dafür benötigtes Mittel vorgeschlagen, wobei um das Drahtseil (3) eine duktile Hülse (4) mit bemessenem Druck gepresst wird. Damit kann die wirkliche Bruchkraft F_{w} des Drahtseiles auf der Basis von in der Vorspanntechnik standardmässig angewendeten Verankerungen übertragen werden. Zudem ist die Endverbindung schlupffrei und kann Temperaturen von mind. 300°C während mind. 30 Min. widerstehen. Dadurch kann die Tragfähigkeit der Drahtseile zu 100% ausgeschöpft werden und "quasi spröde" Brüche der Endverbindungen ohne Vorankündigung durch Fliessen des Drahtseiles können vermieden werden.

## Beschreibung

Die Erfindung bezieht sich auf Endverbindungen an Drahtseilen aus Stahldrähten, wie sie zu deren Befestigung an Bauteilen benutzt werden.

Bekannte Endverbindungen sind z.B. der metallische Seilverguss, der Klemmkopf, die Aluminium Pressverbindung, das Flämische Auge mit Stahlpresshülse, die Bolzenverpressung oder Schlaufen mit Drahtseilklemmen (beschrieben z.B. in: K. Freyer, "Drahtseile", Springer-Verlag, 2. Auflage, 2000, Seiten 352 ff.: "Seilendverbindungen").

Die Bruchkraft der Endverbindungen wird mit derjenigen des metallvergossenen Seiles verglichen, die als wirkliche Bruchkraft F_{w} des Seiles bezeichnet und durch Zerreissen des Seiles im ganzen Strang gemessen wird (F_{w} = 100%).

Falls 100% der wirklichen Bruchkraft F_{w} des Seiles verankert werden soll, werden aufwendig herzustellende metallische Seilvergüsse, US-A-5,211,500, oder Vergüsse mit Kunstharz verwendet. Dabei ist zu beachten, dass die Grenztemperaturen für den Einsatz dieser Seilvergüsse im Betriebszustand bei max. 120 °C bzw. max. ca. 60 °C liegen, was deren Anwendungsmöglichkeiten einschränkt.
Bei vielen praktischen Anwendungen begnügt man sich mit den einfacher herzustellenden Schlaufen mit Aluminium Presshülsen oder mit Schlaufen, die von Drahtseilklemmen gehalten werden. Sowohl mit Presshülsen als auch mit Drahtseilklemmen kann höchstens 80 bis 90 % der wirklichen Bruchkraft F_{w} des Seiles verankert werden. Damit werden die Endverbindungen für die Dimensionierung von Drahtseilkonstruktionen massgebend, was bedeutet, dass die Drahtseile auf ihrer freien Länge nicht voll ausgenützt werden können. Dies ist bei den hohen Kosten für Seile nicht wirtschaftlich.
Aus technischer Sicht ist weiter nachteilig, dass diese Endverbindungen ohne grosse Vorankündigung durch Verlängerung des Seiles infolge Fliessens "quasi spröd" versagen.

Aufgabe der Erfindung ist es, ein Verfahren und eine Drahtseilverbindung zu schaffen, mit denen auf der Basis von Verankerungen mit Einpressklemmen oder entsprechenden Hilfsmitteln, wie sie z.B. in der Vorspanntechnik für 7-drähtige Spannstahllitzen standardmässig verwendet werden, eine kostengünstige Endverbindung für Drahtseile hergestellt werden kann, die 100% der wirklichen Bruchkraft F_{w} des Seiles hält, schlupffrei ist und die Temperaturen von mind. 300°C während 30 Min. widerstehen kann.

Die Aufgabe wird gelöst durch die kennzeichnenden Merkmale des Verfahrens nach Patentanspruch 1 bzw. der Endverbindung nach Patentanspruch 3.

Damit wird eine Endverbindung für Drahtseile aus blanken oder verzinkten Stahldrähten geschaffen, die gegenüber den in der Praxis häufig verwendeten Endverbindungen "quasi spröde" Brüche ohne Vorankündigung durch Fliessen des Seiles verhindert und auch bei aussergewöhnlichen Temperatureinwirkungen, wie z.B. in einem Brandfall, die wirkliche Bruchkraft F_{w} des Seiles bis zu einer Temperatur von mind. 300°C während mind. 30 Minuten zu verankern vermag.

Aus der US-A-5,458,442 ist zwar eine Endverbindung für Drahtseile bekannt, bei welcher zwischen das Drahtseil und eine dasselbe umgebende Kupplungshülse aus Stahl eine Hülse eingebracht und zusammen mit der sie umgebenden Kupplungshülse durch Druck von aussen verformt und gegen das Drahtseil gepresst wird. Hierbei ist es aber nicht möglich, den Anpressdruck so zu bemessen, dass die erfindungsgemäss angestrebten Bedingungen sichergestellt werden können. Ein Ausführungsbeispiel der Erfindung ist nachfolgend anhand der Zeichnungen näher erläutert. Es zeigen:
- Fig. 1: einen Längsschnitt durch eine Endverbindung an einem 12 mm Drahtseil aus blanken oder verzinkten Stahldrähten (Rundlitzenseil 6 x 19 Seale + SE nach DIN 3058) mit angepresster Kupferhülse und einer aus drei Segmenten bestehenden 0,5'' Einpressklemme mit der entsprechenden Ankerbüchse; und
- Fig. 2: einen Querschnitt durch die Endverbindung in Fig. 1.

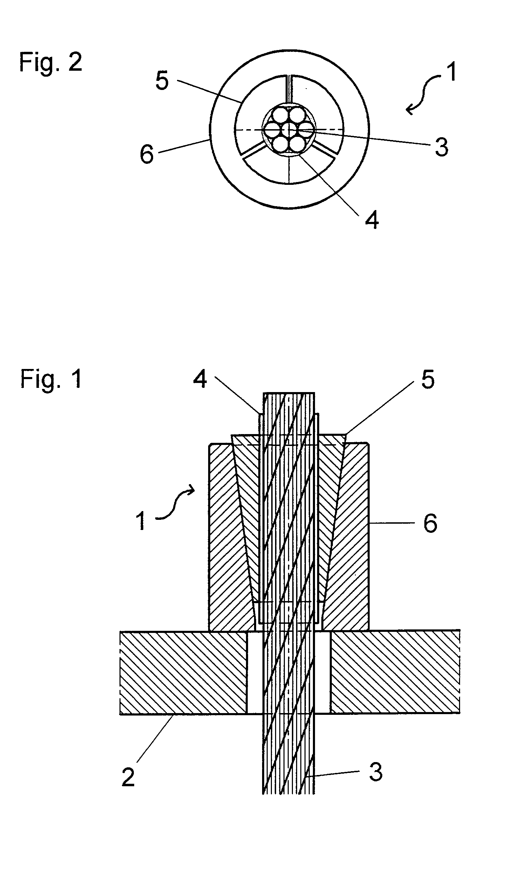

In Fig. 1 ist eine fertige Endverbindung 1 im Längsschnitt dargestellt. An ein 12 mm Drahtseil 3 aus blanken oder verzinkten Stahldrähten (Rundlitzenseil 6 x 19 Seale + SE nach DIN 3058) ist eine Kupferhülse 4 angepresst. Das Seil mit der angepressten Hülse wird mittels einer aus drei Segmenten bestehenden 0,5" Einpressklemme 5 in der eine konische Bohrung zur Aufnahme der Einpressklemmen aufweisenden Ankerbüchse 6 verankert, die sich auf ein Auflager 2 abstützt. Die Teile 5 und 6 bilden somit ein Press- und Kupplungsorgan.

In Fig. 2 ist ein Schnitt durch die Endverbindung 1 dargestellt, der zeigt, wie die Kupferhülse 4 an ihrer Innenfläche die Oberflächenkonturen des Seiles 3 annimmt. Durch den Formschluss und die Reibungskräfte an der Kontaktfläche zwischen Hülse und Seil, hervorgerufen durch das Anpressen der Hülse und die Klemmkraft der Einpressklemme, wird das Seil in der Hülse festgehalten.

Das Verfahren zur Herstellung der Endverbindung besteht aus den folgenden zwei Arbeitsschritten:
1. Die Kupferhülse, die im Ausgangszustand gegenüber dem Drahtseil einen Ringspalt von ca. 0,5 bis 2,0 mm aufweist, wird mit einer nicht dargestellten Radialpresse an das Seil angepresst. Das beim Reduzieren des Hülsendurchmessers verdrängte Material fliesst in die Oberflächenkonturen des Drahtseiles. So entsteht ein vollständiger Formschluss zwischen Drahtseil und Hülse.
2. Die das Drahtseil mit angepresster Kupferhülse umfassende Einpressklemme wird mit einer Einpresskraft, die der ca. 1,5 bis 2,5-fachen wirklichen Bruchkraft F_{w} des Drahtseiles entspricht, in die Ankerbüchse eingepresst. So entsteht eine bis zur wirklichen Bruchkraft F_{w} schlupffreie Verankerung des Drahtseiles.

Die Hülse, die an das Drahtseil angepresst wird, muss eine Geometrie und Materialeigenschaften aufweisen, die es erlauben den Formschluss mit der Oberflächenkontur des Drahtseiles herzustellen und die Verankerung mit der Einpressklemme sicherzustellen.

Die vorgeschlagene Endverbindung für Drahtseile ist einfach und zuverlässig herzustellen, da sie auf der Verwendung von Einpressklemmen basiert, wie sie z.B. in der Vorspanntechnik zur Verankerung von 7-drähtigen Spannstahllitzen standardmässig verwendet werden. Um die Anpressbedingungen bzw. den Anpressdruck und die Verformungen genau bemessen und kontrollieren zu können, kann es von Vorteil sein, eine geschlitzte Hülse (4) zu verwenden.

## Patentansprüche

1. Verfahren zum Erstellen einer Endverbindung an einem Drahtseil aus Stahldrähten, **gekennzeichnet durch** die Kombination folgender Schritte:
a) über das zu verbindende Seilende (3) wird eine Hülse (4) aus einem duktileren Material als der Stahl der Drähte aufgebracht;
b) die Hülse wird **durch** Druck von aussen verformt und an bzw. in das Drahtseil gepresst, und
c) über der verformten Hülse wird ein Press- und Kupplungsorgan (5, 6) mit kontrollierter Pressung angebracht, um die endgültige Verbindung zu erzielen.

2. Verfahren nach Anspruch 1, **dadurch gekennzeichnet , dass** als Press- und Kupplungsorgan eine Einpressklemme (5,6) mit Presskeilen (5) vorgesehen wird, die mit der 1,5 bis 2,5-fachen wirklichen Bruchkraft des Seiles eingepresst wird.

3. Nach dem Verfahren nach Anspruch 1 erstellte Endverbindung an einem Drahtseil aus Stahldrähten, **dadurch gekennzeichnet, dass** um das zu verbindende Seilende eine Hülse (4) aus duktilerem Material als der Stahl der Drähte gepresst ist, wobei mittels eines Press- und Kupplungsorgans (5,6) die Hülse mit bemessenem Druck gegen das Drahtseil angepresst ist.

4. Verbindung nach Patentanspruch 3, **dadurch gekennzeichnet, dass** die unverformte Hülse einen Innendurchmesser aufweist, der um 0,5 - 2,0 mm grösser als der Seildurchmesser ist.

5. Verbindung nach Anspruch 3 oder 4, **dadurch gekennzeichnet, dass** die Wandstärke der Hülse (4) 0,5 - 2,0 mm beträgt, so dass nach deren Anpressen an die Oberflächenkonturen des Drahtseiles, der Klemmenbiss an der dünnsten Restwandstärke nicht bis auf die Drahtseiloberfläche durchdringt.

6. Verbindung nach einem der Patentansprüche 3 bis 5, **dadurch gekennzeichnet, dass** die Länge der Hülse (4) dem 3-bis 4-fachen Seildurchmesser entspricht.

7. Verbindung nach einem der Ansprüche 3 bis 6, **dadurch gekennzeichnet, dass** die Hülse (4) aus Kupfer oder aus einer Metalllegierung, z.B. einer Kupferlegierung besteht, die einerseits genügend weich ist, um die Oberflächenkonturen des Drahtseiles anzunehmen und andererseits eine genügende Scherfestigkeit zum Übertragen der Seilkräfte auf die Zahnung der Einpressklemme aufweist.

8. Verbindung nach einem der Ansprüche 3 bis 7, **gekennzeichnet durch** eine geschlitzte Hülse (4).

9. Verbindung nach einem der Ansprüche 3 bis 8 an einem 7-drähtigen Drahtseil.
